# EUROPEAN PATENT APPLICATION

(11) **EP 2 693 765 A2**
(43) Date of publication of application: **05.02.2014**
(21) Application number: 12763983.9
(22) Date of filing: 30.03.2012
(51) Int. Cl.: H04N 21/472

(54) **APPARATUS AND METHOD FOR MANAGING A PROGRAM-RELATED APPLICATION WIDGET IN A BROADCAST RECEIVER**

(30) Priority: 31.03.2011 KR 20110029261
(71) Applicant: Samsung Electronics Co., Ltd., Suwon-si, Gyeonggi-do 443-742 (KR)
(72) Inventor: PARK, Kyung-Mo, Seoul 135-778 (KR); HWANG, Sung-Oh, Yongin-si Gyeonggi-do 448-712 (KR); SONG, Jae-Yeon, Seoul 135-796 (KR)
(74) Representative: Nederlandsch Octrooibureau
(86) International application number: PCT/KR2012/002387
(87) International publication number: WO 2012/134224

(57) **Abstract**

An apparatus and method for managing a program-related application widget in a broadcast receiver is provided. The method includes receiving information on an application widget, which may interact with a program and content, from a broadcast provider server and managing the application widget, which may interact with the program and content, based on the received information on the application widget.

## Description

### BACKGROUND OF THE INVENTION

### 1. Field of the Invention

The present invention relates to a broadcast receiver. More particularly, the present invention relates to an apparatus and method for managing a program-related application widget in a broadcast receiver.

### 2. Description of the Related Art

A hybrid network is to combine a broadcast network with an Internet network. Program services and contents are provided through the hybrid network.

It is needed to install various application widgets according to kinds of programs or contents in a multimedia service which provides programs and contents through the hybrid network. For example, in case of a car racing program, it may be needed to install an information widget informing states of a driver and a vehicle, a weather widget informing weather of a corresponding area, a map widget informing local information of a corresponding area, etc.

In a conventional broadcast receiver, a user of the conventional broadcast receiver must operate the broadcast receiver directly and search and download a corresponding application widget to install the corresponding application widget which may interact while being classified according to a program or content. Therefore, this results in an inconvenience to the user.

Also, there is a problem in that it is impossible to automatically manage application widgets which are previously installed. For example, when a vote widget for selecting a popular singer in a singing program is installed, after the corresponding program is ended, there is the corresponding vote widget because the corresponding vote widget is not automatically deleted. Accordingly, there is an inconvenience in that the user must delete an unnecessary application widget separately.

### SUMMARY OF THE INVENTION

An aspect of the present invention is to solve at least the above-mentioned problems and/or disadvantages and to provide at least the advantages described below. Accordingly, an aspect of the present invention is to provide an apparatus and method for managing a program-related application widget in a broadcast receiver.

Another aspect of the present invention is to provide an apparatus and method for defining a table including information on an application widget and efficiently managing the application widget, which may interact with a program and content, based on the information.

Another aspect of the present invention is to provide an apparatus and method for periodically receiving information on an application widget, which may interact with a program and content, from a broadcast provider server, storing the received application widget information, downloading and installing an application widget, which may interact with a program or content requested by a user, from a widget server based on the stored application widget information, and holding/updating/deleting the installed application widget based on the stored application widget information.

In accordance with an aspect of the present invention, a method of managing a program-related application widget in a broadcast receiver is provided. The method includes receiving information on an application widget, which may interact with a program and content, from a broadcast provider server and managing the application widget, which may interact with the program and content, based on the received information on the application widget.

In accordance with another aspect of the present invention, an apparatus for managing a program-related application widget in a broadcast receiver is provided. The apparatus includes a communication unit for receiving information on an application widget, which may interact with a program and content, from a broadcast provider server and a widget management unit for managing the application widget, which may interact with the program and content, based on the received information on the application widget.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a broadcast system illustrating a process of managing a program-related application widget in a broadcast receiver according to one embodiment of the present invention;
FIG. 2 is a block diagram illustrating configuration of a broadcast receiver according to one embodiment of the present invention; and
FIG. 3 is a flowchart illustrating a process of managing a program-related application widget in a broadcast receiver according to one embodiment of the present invention.

### DETAILED DESCRIPTION OF EXEMPLARY EMBODIMENTS

Exemplary embodiments of the present invention will be described herein below with reference to the accompanying drawings. In the following description, well-known functions or constructions are not described in detail since they would obscure the invention in unnecessary detail.

Hereinafter, a description will now be given for an apparatus and method of managing a program-related application widget in a broadcast receiver.

Hereinafter, the broadcast receiver may be applied to at least one of all of receivers which may use application widgets which may interact with programs and contents.

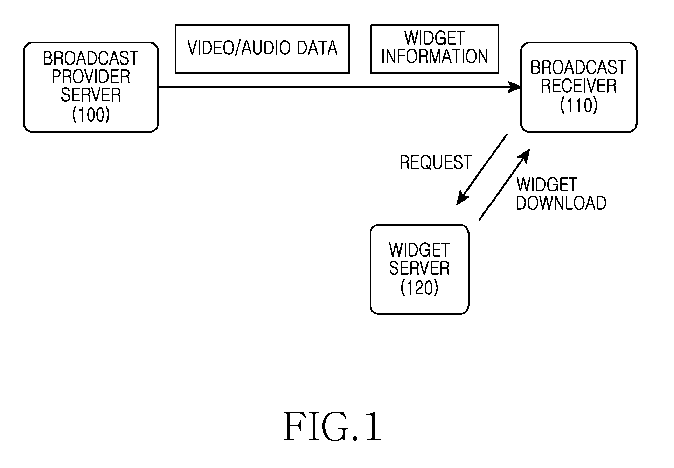

FIG. 1 is a broadcast system illustrating a process of managing a program-related application widget in a broadcast receiver according to one embodiment of the present invention.

Referring to FIG. 1, a broadcast provider server 100 transmits video/audio data corresponding to programs or contents to a broadcast receiver 110. In accordance with one embodiment of the present invention, the broadcast provider server 100 transmits information on an application widget, which may interact with a program or content, to the broadcast receiver 110 periodically.

The broadcast receiver 110 receives and decodes video/audio data of a program or content, which is requested by a user, from the broadcast provider server 100 and displays the decoded data on its screen. In accordance with one embodiment of the present invention, the broadcast receiver 110 receives the information on the application widget, which may interact with the program and content, periodically from the broadcast provider server 100 and stores the received application widget information in its memory. The broadcast receiver 110 requests a widget server 120 to download an application widget, which may interact with the program or content requested by the user, based on the stored application widget information, and downloads and installs the requested application widget. The broadcast receiver 110 holds/updates/deletes the installed application widget based on the stored application widget information.

The widget server 120 stores and manages application widgets.

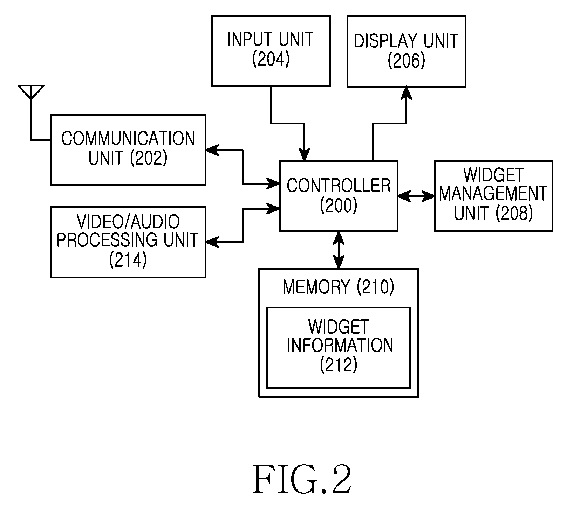

FIG. 2 is a block diagram illustrating configuration of a broadcast receiver according to one embodiment of the present invention.

As shown in FIG. 2, the broadcast receiver includes a controller 200, a communication unit 202, an input unit 204, a display unit 206, a widget management unit 208, a memory 210, and a video/audio processing unit 214.

Referring to FIG. 2, the controller 200 controls an overall operation of the broadcast receiver. Particularly, in accordance with one embodiment of the present invention, the controller 200 performs a function for managing a program-related application widget.

The communication unit 202 performs a function for transmitting and receiving a Radio Frequency (RF) signal input and output through an antenna. For example, in a transmission procedure, the communication unit 202 performs a function for performing channel coding and spreading of data to be transmitted and performing RF processing and transmission of the spread data. In a reception procedure, the communication unit 202 performs a function for restoring a received RF signal to data by performing dispreading and channel decoding of the received RF signal.

The input unit 204 has numeric key buttons and a plurality of function key buttons. The input unit 204 provides key button input data corresponding to a key button pushed by a user to the controller 200.

The display unit 206 displays state information generated during an operation of the broadcast receiver, a limited number of characters, many moving and still pictures, etc. The display unit 206 may be a Liquid Crystal Display (LCD).

The widget management unit 208 stores information 212 on an application widget, which may interact with a program and content, periodically from a broadcast provider server and stores the application widget information 212 in the memory 210. The widget management unit 208 downloads and installs an application widget, which may interact with a program or content requested by the user, based on the stored application widget information 212 from a widget server. The widget management unit 208 holds/updates/deletes the installed application widget based on the stored application widget information 212.

The memory 210 stores microcodes of programs for processes and controls of the controller 200, various reference data, temporary data generated while various programs are executed, and various rewritable data. Particularly, in accordance with one embodiment of the present invention, the memory 210 stores a program for managing a program-related application widget. Also, the memory 210 stores the application widget information 212.

The video/audio processing unit 214 has a video codec/audio codec (not shown). The video/audio processing unit 214 decodes coded video/audio data from the controller 200 into original video/audio data and provides the decoded video/audio data to the controller 200. The controller 200 may display the decoded video on a screen of the display unit 206 and output the decoded audio data through a speaker (not shown) of the broadcast receiver.

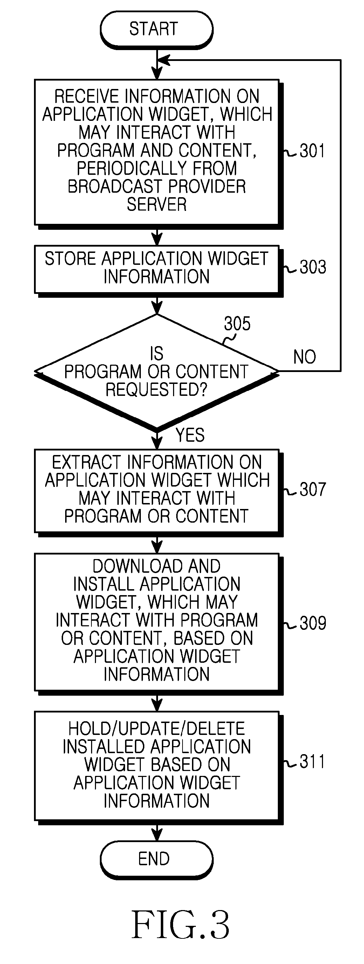

FIG. 3 is a flowchart illustrating a process of managing a program-related application widget in a broadcast receiver according to one embodiment of the present invention.

Referring to FIG. 3, in step 301, the broadcast receiver receives information on an application widget, which may interact with a program and content, periodically from a broadcast provider server.

Herein, the information on the application widget may be periodically transmitted as a table type of Table 1 below to a broadcast receiver by the broadcast provider server. Hereinafter, a table including the information on the application widget is referred to as a Widget Life Cycle Information Table (WLCIT).

**[Table 1]**

| Widget Life Cycle Information Table { | |
|---|---|
| Table ID | Table Identifier |
| Widget ID | Widget Identifier for Life cycle |
| | management |
| Content ID | Content Identifier |
| Program ID | Program Identifier |
| } | |

Herein, as shown in Table 1, the information on the application widget may be configured by including a Table ID for identifying a WLCIT, a Widget ID for identifying an application widget, a Content ID for identifying a content, and a Program ID for identifying a program. In addition, information of various fields may be added to the information on the application widget. That is, the information on the application widget may be configured as list information of the application widget which may interact with the program and content managed through the Table ID. Herein, the information on the application widget may have a mapping relation of Program ID : Content ID : Widget ID = 1 : N : M. For one example, the Widget ID may be expressed as Uniform Resource Locator (URL) information of a widget server which may download the application widget. For another example, when the application widget itself is periodically included in a program or content, the Widget ID may be expressed, as track information in which a part (or all) of the application widget is located, in the corresponding program or content.

Herein, additional application widget information to the application widget information of Table 1 may be periodically transmitted as a table type of Table 2 below to the broadcast receiver by the broadcast provider server.

**[Table 2]**

| Widget Life Cycle Information Table { | | | |
|---|---|---|---|
| | Table ID | | Table Identifier |
| | Version | | Table version |
| | Validity | | Table Validity duration |
| | Widget ID | | Widget Identifier for Life cycle management |
| | Program ID | | Program Identifier |
| | Widget Life Cycle { | | Information for Widget Life cycle management |
| | | Duration | Operating cycle of the Widget |
| | | Type | Widget installation attribute (Permanent or Temporal) |
| | | Periodically | periodic installation |
| | | Descriptor | Widget description |
| | | } | |
| | } | | |

Herein, as shown in Table 2, the additional application widget information may be configured by including a Table ID for identifying a WLCIT, a Version for indicating a version of the WLCIT, a Validity for indicating a valid period of the WLCIT, a Widget ID for identifying an application widget managed through the Table ID, a Program ID for identifying a program which may interact with the application widget, and a Duration, Type, Periodically, and Descriptor as Widget Life Cycle information to be applied to the application widget. In addition, information of various fields may be added to the additional application widget information. Herein, the Duration indicates a play time of a corresponding program. This means that the application widget may operate during a corresponding period. The Type may indicate an attribute for installing the application widget and be classified into permanent installation and temporary installation. The Periodically indicates whether an application widget is periodically installed. The Descriptor indicates interaction explanation for the application widget. For example, the Descriptor may indicate that the application widget interact with other programs or application widgets. Herein, as described above, the information in Tables 1 and 2 may be included in separate tables and be then transmitted. However, it is obvious that the information in Tables 1 and 2 may be included in one table and be then transmitted.

Thereafter, in step 303, the broadcast receiver stores the application widget information periodically received from the broadcast provider server in its memory.

In step 305, the broadcast receiver checks whether a program or content is requested according to a key operation of a user, to watch the program or use the content.

When it is determined that the program or content is requested according to the key operation of the user in step 305, in step 307, the broadcast receiver extracts information on an application widget, which may interact with the requested program or content, from the memory.

Thereafter, in step 309, the broadcast receiver downloads and installs the application widget, which may interact with the requested program or content, based on the extracted application widget information from a widget server. For example, when a car racing program is requested, the broadcast receiver may request and download widgets, which may interact with the corresponding car racing program, such as an information widget informing states of a driver and a vehicle, a weather widget informing weather of a corresponding area, a map widget informing local information of a corresponding area, etc., based on the application widget information.

In step 311, the broadcast receiver holds/updates/deletes the installed application widget based on the extracted application widget information. For example, when a vote widget for selecting a popular singer in a singing program is installed, the broadcast receiver may hold an operation of the corresponding application widget while the corresponding program is reproduced based on operation period information of the corresponding application widget among the application widget information and delete the corresponding application widget automatically when the corresponding program is ended. Also, the broadcast receiver may install and update the corresponding application widget periodically and automatically based on information indicating whether the corresponding application widget is periodically installed among the application widget information.

On the other hand, when it is determined that the program or content is not requested according to the key operation of the user in step 305, the broadcast receiver performs the processing from step 301 again.

Thereafter, the broadcast receiver ends the algorithm of FIG. 3.

The above-described broadcast receiver may be at least one of all electronic devices which may receive broadcasts.

Methods according to claims of the present invention and/or embodiments described in the specification of the present invention may be implemented as hardware, software, or combinational type of the hardware and the software.

When the method is implemented by the software, a computer-readable storage medium for storing one or more programs (software modules) may be provided. The one or more programs stored in the computer-readable storage medium may be executed by one or more processors in an electronic device. The one or more programs include instructions for allowing an electronic device to execute the methods according to the claims of the present invention and/or the embodiments described in the specification of the present invention.

These programs (software module, software) may be stored in a Random Access Memory (RAM), a non-volatile memory including a flash memory, a Read Only Memory (ROM), an Electrically Erasable Programmable ROM (EEPROM), a magnetic disc storage device, a Compact Disc-ROM (CD-ROM), a Digital Versatile Disc (DVD) or an optical storage device of a different type, and a magnetic cassette. Or, the programs may be stored in a memory configured by combination of some or all of them. Also, the configured memory may include a plurality of memories.

Also, the programs may stored in an attachable storage device which may access an electronic device through each of communication networks such as the Internet, an intranet, a Local Area Network (LAN), a Wide LAN (WLAN), and a Storage Area Network (SAN) or a communication network configured by combination of them. This storage device may connect to the electronic device through an external port.

Also, a separate storage device on a communication network may connect to a portable electronic device.

As described above, the broadcast receiver according to embodiments of the present invention receives the information on the application widget, which may interact with the program or content, periodically from the broadcast provider server and stores the received application widget information in the memory. The broadcast receiver downloads and installs the application widget, which may interact with the program or content requested by the user, based on the stored application widget information from the widget server. The broadcast receiver holds/updates/deletes the installed application widget based on the stored application widget information. Accordingly, there is an advantage in that the broadcast receiver according to embodiments of the present invention easily obtain the information on the application widget which may interact with the program or content and manages (e.g., installs/holds/updates/deletes) the corresponding application widget.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of managing a program-related application widget in a broadcast receiver, the method comprising:
receiving information on an application widget, which may interact with a program and content, from a broadcast provider server; and
managing the application widget, which may interact with the program and content, based on the received information on the application widget.

2. The method of claim 1, further comprising:
storing the received information on the application widget;
checking whether the program or content is requested; and
extracting the information on the application widget, which may interact with the requested program or content, from the memory when the program or content is requested.

3. The method of claim 1, wherein the management of the application widget comprises:
requesting an application widget, which may interact with requested program or content, to a widget server based on the received information on the application widget; and
downloading and installing the application widget, which may interact with the requested program or content, from the widget server.

4. The method of claim 3, further comprising holding, updating, or deleting the installed application widget based on the received information on the application widget.

5. The method of claim 1, wherein the information on the application widget which may interact with the program and content includes list information on the application widget which may interact with the program and content.

6. The method of claim 5, wherein the information on the application widget which may interact with the program and content further includes at least one of an operation period of the application widget, an attribute for installing the application widget, information indicating whether the application widget is periodically installed, and information indicating whether the application widget interacts with other programs or application widgets.

7. An apparatus for managing a program-related application widget in a broadcast receiver, the apparatus comprising:
a communication unit for receiving information on an application widget, which may interact with a program and content, from a broadcast provider server; and
a widget management unit for managing the application widget, which may interact with the program and content, based on the received information on the application widget.

8. The apparatus of claim 7, further comprising a memory for storing the received information on the application widget,
wherein the widget management unit checks whether the program or content is requested and extracts the information on the application widget, which may interact with the requested program or content, from the memory when the program or content is requested.

9. The apparatus of claim 7, wherein the widget management unit requests an application widget, which may interact with requested program or content, to a widget server based on the received information on the application widget and downloads and installs the application widget, which may interact with the requested program or content, from the widget server.

10. The apparatus of claim 9, wherein the widget management unit holds, updates, or deletes the installed application widget based on the received information on the application widget.

11. The apparatus of claim 7, wherein the information on the application widget which may interact with the program and content includes list information on the application widget which may interact with the program and content.

12. The apparatus of claim 11, wherein the information on the application widget which may interact with the program and content further includes at least one of an operation period of the application widget, an attribute for installing the application widget, information indicating whether the application widget is periodically installed, and information indicating whether the application widget interacts with other programs or application widgets.

13. A computer-readable medium storing one or more programs comprising instructions for allowing an electronic device to perform the method of claim 1, when the instructions will be executed by the electronic device.
